(19) **Europäisches Patentamt**

**European Patent Office**

**Office européen des brevets**

(11) **EP 1 146 375 A2**

(12) **EUROPÄISCHE PATENTANMELDUNG**

(43) Veröffentlichungstag:
17.10.2001 Patentblatt 2001/42

(51) Int Cl.⁷: **G02B 7/04**, G02B 7/36,
H04N 5/232, G02B 23/12

(21) Anmeldenummer: 01102367.8

(22) Anmeldetag: 02.02.2001

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **13.04.2000 DE 10018312**

(71) Anmelder: **STN ATLAS Elektronik GmbH**
**28305 Bremen (DE)**

(72) Erfinder:
• **Buddemeier, Udo**
**28359 Bremen (DE)**

• **Hamfeld, Heinz**
**28359 Bremen (DE)**
• **Wehrhahn, Thomas**
**28325 Bremen (DE)**

(74) Vertreter: **Thul, Hermann, Dipl.-Phys.**
**Zentrale Patentabteilung,**
**Rheinmetall AG,**
**Rheinmetall Allee 1**
**40476 Düsseldorf (DE)**

(54) **Verfahren und Vorrichtung zum Fokussieren eines Bildes**

(57) Bei einem Verfahren zum Fokussieren eines Bildes, das in der Bildebene eines Bildaufnahmegeräts, insbesondere eines Wärmebildgeräts mittels eines optischen Objektivs abgebildet, mittels eines optoelektronischen Detektors bildpunktweise abgetastet und visuell dargestellt wird, wird zwecks einer vom Benutzer unabhängigen automatischen Einstellung der Bildschärfe eine motorische Objektivverstellung vorgenommen und aus dem jeweils einer Objektivverstellung zugehörigen Bild ein Bildschärfewert ermittelt und mit den Bildschärfewerten die Objektivverstellung gesteuert. Der jeweilige Bildschärfewert wird als Summe der Quadrate der Differenz der Intensitäten benachbarter Bildpunkte berechnet und das Objektiv solange verstellt, bis die Summe ein eindeutiges Maximum ergibt.

Fig. 1

EP 1 146 375 A2

**Beschreibung**

Die Erfindung betrifft ein Verfahren zum Fokussieren eines Bildes, das in der Bildebene eines Bildaufnahmegeräts, insbesondere eines Wärmebildgeräts, abgebildet, mittels eines optoelektronischen Detektors bildpunktweise abgetastet und visuell dargestellt wird der im Oberbegriff des Anspruchs 1 definierten Gattung, sowie eine Vorrichtung zum Fokussieren eines Bildes in einem Bildaufnahmegerät, insbesondere in einem Wärmebildgerät, der im Oberbegriff des Anspruchs 12 definierten Gattung.

Bei Wärmebildkameras ist der Fokus des Objektivs temperaturempfindlich, so daß die Bildschärfe des Wärmebildes ständig nachgestellt werden muß. Da bekannte Wärmebildgeräte nur die Möglichkeit einer manuellen Fokussierung bieten, bei der das Objektiv manuell solange verschoben wird, bis das auf dem Bildschirm erscheinende Wärmebild einen vom Bediener beurteilten ausreichenden Schärfeeindruck erreicht hat, besteht der Wunsch nach einer von dem Bediener unabhängigen automatischen Fokussierung des Wärmebildes.

Bei anderen Bildaufnahmegeräten, wie Videokameras oder Fotoapparaten, gehören automatische Fokussiereinrichtungen bereits zur Standardausstattung. Diese automatischen Fokussiereinrichtungen, im allgemeinen als Autofokus bezeichnet, arbeiten entweder aktiv im Infrarotbereich, z. B. durch Entfernungsmessung, oder passiv, indem besondere Detektoren eingesetzt werden.

Der Erfindung liegt die Aufgabe zugrunde, ein für Bildaufnahmegeräte, insbesondere für Wärmebildgeräte, geeignetes Verfahren zum automatischen Fokussieren sowie eine Vorrichtung hierzu anzugeben, das bzw. die sich mit geringem elektronischen Aufwand realisieren und in ein Bildaufnahmegerät integrieren läßt, ohne die Fertigungskosten und das Bauvolumen des Bildaufnahmegeräts nennenswert zu steigern.

Die Aufgabe ist erfindungsgemäß durch die Merkmale im Patentanspruch 1 bzw. im Patentanspruch 12 gelöst.

Das erfindungsgemäße Verfahren bzw. die erfindungsgemäße Vorrichtung hat den Vorteil, daß es bzw. sie eine automatische Fokussierung mit relativ geringem Hardwareaufwand bietet, da im großen Umfang bereits in dem Bildaufnahmegeräte aus anderen technischen Gründen vorhandene Bauelemente genutzt werden. Verfahren und Vorrichtung arbeiten passiv, so daß die Verwendung im militärischen Bereich für Aufklärungs- und Beobachtungszwecken möglich ist. Insbesondere für Wärmebildgeräte führt das Verfahren bzw. die Vorrichtung zu einer deutlichen Steigerung der Funktionalität, ohne daß sich nennenswerte Auswirkungen auf Herstellkosten und Gerätegröße ergeben. So benötigt das Verfahren bzw. die Vorrichtung keinen separaten Detektor, sondern nutzt den bereits für die Wärmebildgenerierung vorhandenen optoelektronischen Detektor, und kann für die Steuerelektronik die bereits vorhandene zentrale Recheneinheit (CPU) nutzen. Der Algorithmus zur Berechnung der Bildschärfe wird in einem programmierbaren Logikgatter, einem sog. FPGA (Field Programable Gate Array), untergebracht. Dabei ist die Zahl der erforderlichen Gatterfunktionen so gering, daß bei der heute verfügbaren Technologie dieser Algorithmus auch zusammen mit der in einem Wärmebildgerät vorhandenen programmierbaren Logik in einem somit ohnehin erforderlichen FPGA untergebracht werden kann.

Gemäß einer bevorzugten Ausführungsform des erfindungsgemäßen Verfahrens wird als Bildschärfewert die Summe der Quadrate der Differenz der Intensität benachbarter Bildpunkte berechnet und das Objektiv solange verstellt, bis die Summe ein eindeutiges Maximum ergibt. Wird zur Bildabtastung ein Zeilendetektor mit einer Vielzahl von in Vertikalrichtung untereinander angeordneten Detektorelementen verwendet, der in Horizontalrichtung schrittweise über das Bild hinweggeführt wird, so erfolgt die Berechnung der Bildschärfewerte nur mit den Intensitäten, die von den in Horizontalrichtung nebeneinanderliegenden Bildpunkten abgenommen sind. Damit wird vermieden, daß die bei einem Zeilendetektor auftretenden Offsetfehler zu einer Verfälschung des Bildschärfewertes führen. Wird dagegen gemäß einer weiteren Ausführungsform des Verfahrens zur Bildabtastung ein Flächen- oder Arraydetekor verwendet, so kann die Berechnung der Bildschärfewerte mit Intensitäten vorgenommen werden, die von horizontal nebeneinander oder vertikal übereinander oder diagonal zueinander liegenden Bildpunkten abgenommen sind.

Die Erfindung ist anhand eines in der Zeichnung illustrierten Ausführungsbeispiels im folgenden näher beschrieben. Es zeigen:

Fig. 1    ein Blockschaltbild eines Wärmebildgeräts mit einer automatischen Fokussiervorrichtung,

Fig. 2    ein Diagramm einer den Zusammenhang zwischen Bildschärfe und Fokusposition angebenden Funktion.

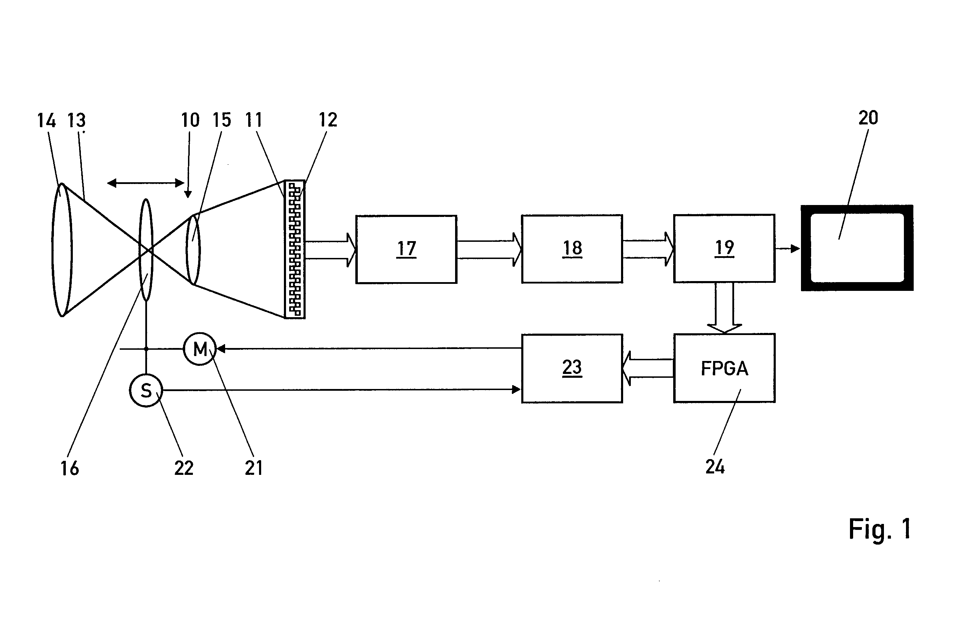

Das in Fig. 1 schematisch im Blockschaltbild dargestellte Wärmebildgerät als Ausführungsbeispiel für ein allgemeines Bildaufnahmegerät weist ein optisches Objektiv 10 auf, das ein Bild in der Bildebene 11 abbildet, in der ein optoelektronischer Detektor 12 angeordnet ist. Durch entsprechende Einstellung des Objektivs 10 werden in verschiedenen Entfernungen vom Objektiv 10 aufgefaßte Bilder scharf in der Bildebene 11 und damit auf der Oberfläche des Detektors 12 abgebildet. Dieser Vorgang wird als Fokussieren bezeichnet. Zum Fokussieren weist das hier als Fernrohr oder Teleskop 13 ausgebildete Objektiv 10 neben den verschiedenen, in der Objektivfassung feststehenden Abbildungslinsen 14, 15 eine Fokuslinse 16 auf, die längs der Objektivachse innerhalb eines festgelegten Verstellbereichs verschiebbar ist und durch Verschieben das Bild in der Bildebene 11 fokussiert, d. h. scharf abbildet. Als optoelektronischer Detektor 12 kann ein sog. Flächen- oder Arraydetektor verwendet werden, auf dessen Oberfläche das vom Teleskop 13 erzeugte Bild vollständig abgebildet ist. Im beschriebenen Ausführungsbeispiel wird ein Zeilendetektor verwendet, der eine Vielzahl von in Vertikalrichtung untereinander angeordneten Detektorelementen aufweist und in Horizontalrichtung schrittweise über das in der Bildebene 11 abgebildete Bild hinweggeführt wird. Ein solcher Zeilendetektor wird beispielsweise von der Firma AIM, Heilbronn, unter der Bezeichnung 96 x 4 CMT für den Wellenlängenbereich 8 - 12 μm im Handel angeboten. Das in der Bildebene 11 entworfene Bild wird dabei mittels eines sich drehenden Spiegels schrittweise auf dem Zeilendetektor 12 abgebildet.

Dem Detektor 12 ist ein Analog-Digital-Wandler 17 und dem Analog-Digital-Wandler 17 ein digitaler Scanconverter nachgeschaltet, der die vertikale und horizontale schrittweise Abtastung des Bildes durch den Detektor 12 in eine fernsehnormgerechte Zeilendarstellung umsetzt. Die Ausgangssignale des Scanconverters werden einem Bildgenerator 19 zugeführt, der mit einem Monitor 20 zur visuellen Darstellung des Wärmebilds verbunden ist.

Da der Fokuspunkt des Teleskops 13 beim Wärmebildgerät stark temperaturabhängig ist und das Wärmebildgerät auch zum Verfolgen von sich bewegenden Zielen verwendet wird, ist eine automatische Fokussierung vorgesehen, bei welcher das in der Bildebene 11 vom Teleskop 13 entworfene Bild ständig in der Schärfe nachgeregelt wird. Hierzu wird die Objektiveinstellung, d. h. die Verschiebung der Fokuslinse 16, motorisch vorgenommen und aus dem jeweils einer Objektiveinstellung zugehörigen aktuellen Bild ein Bildschärfewert S ermittelt. Mit den Bildschärfewerten S wird die Objektivverstellung gesteuert. Der Bildschärfewert wird dabei nach der Formel

$$S = \sum_{i,j} (x_{i,j} - x_{i,j-1})^2$$

berechnet, wobei x die Intensitäten benachbarter Bildpunkte oder Pixel, i die Ordnungszahl der in Vertikalrichtung untereinander liegenden Bildpunkte und j die Ordnungszahl der in Horizontalrichtung nebeneinander liegenden Bildpunkte ist. Bei einem Zeilendetektor werden diese Intensitäten x von der Vielzahl i der in Vertikalrichtung untereinander angeordneten Detektorelementen geliefert, die schrittweise über das Bild hinweggeführt werden, so daß pro Abtastschritt j immer die Vielzahl i von Intensitäten x erfaßt wird. Die Berechnung der Schärfewerte S wird nur mit den Intensitäten $x_{i,j}$ durchgeführt, die von den in Horizontalrichtung nebeneinanderliegenden Bildpunkten abgenommen sind, d. h. es werden nur die Quadrate der Intensitätsdifferenzen zwischen in Horizontalrichtung nebeneinander liegenden Pixeln aufsummiert. Bei Verwendung eines Flächenarrays ist es auch möglich, die Differenzen zwischen in Vertikalrichtung oder in Diagonalrichtung nebeneinanderliegenden Pixel zu bilden und deren Quadrate aufzusummieren. Die Berechnung der Bilschärfewerte erfolgt vorzugsweise mittels Hardware in einem programmierbaren Logikgatter, das als Field Programable Gate Array (FPGA) bekannt ist.

Ausgehend von einer Endposition der Fokuslinse 16 innerhalb ihres Verstellbereiches wird die Fokuslinse 16 in Richtung ihres anderen Endpunktes des Verstellbereiches verschoben und zu jeder Verschiebeposition der Bildschärfewert S berechnet, so daß sich die Bildschärfe als Funktion der Position der Fokuslinse 16 bzw. der Objektiveinstellung ergibt. Ist der gesamte Verstellbereich durchfahren, so wird das Maximum der Funktion, das sog. Schärfemaximum, ermittelt und die dem Schärfemaximum zugehörige Position der Fokuslinse 16 angefahren. Das Objektiv 10 ist damit auf die größte Bildschärfe eingestellt. Wird beim Durchfahren des Verstellbereichs des Objektivs 10, bzw. des Verschiebebereichs der Fokuslinse 16, das Schärfemaximum eindeutig erkannt, so kann das Durchfahren des Verstellbereichs abgebrochen und sogleich die dem Schärfemaximum zugehörige Position der Fokuslinse 16 angefahren werden.

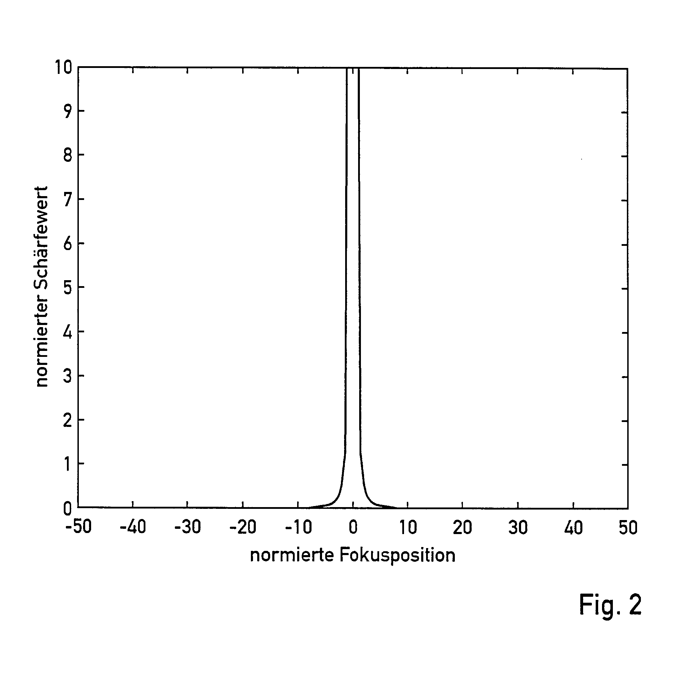

Zur Durchführung des beschriebenen Fokussierverfahrens ist das Wärmebildgerät gemäß Blockschaltbild nach Fig. 1 mit einer Fokussiervorrichtung ausgestattet, die einen elektrischen Stellmotor 21 zur Verschiebung der Fokuslinse 16 sowie einen Sensor 22 zur Erfassung der Verschiebeposition der Fokuslinse 16 aufweist. Ferner umfaßt die Fokussiervorrichtung eine Steuerelektronik 23 zum Steuern des Stellmotors 21, die mit einem programmierbaren Logikgatter 24, dem sog. FPGA, in welchem der bereits beschriebene Bildschärfewert errechnet wird, verbunden ist. Die Intensitätswerte der einzelnen Pixel, die zur Berechnung der Bildschärfe erforderlich sind, werden dem Logikgatter 24 von dem Bildgenerator 19 zugeführt. Die Steuerelektronik 23, die im wesentlichen von einer zentralen Recheneinheit (CPU) gebildet ist, erhält vom Sensor 22 die momentane Position der Fokuslinse 16 als Fokusposition P zugeführt und ordnet sie den Schärfewerten S zu, so daß die Bildschärfe S als Funktion der Fokusposition P erfaßt ist. Ein Beispiel für diese Funktion S = f(P) ist in dem Diagramm der Fig. 2 dargestellt, wobei die Bildschärfewerte S und die Werte der Fokuspositionen P normiert worden sind. Die Steuerelektronik 23 bestimmt nunmehr in dieser Funktion S = f(P) das Maximum, das sog. Schärfemaximum, und regelt durch Ansteuerung des Stellmotors 21 die Fokuslinse 16 auf die dem Schärfemaximum zugehörige Fokusposition ein.

Wie bereits vorstehend erwähnt, wird durch einen in die Steuerelektronik 23 implementierten Steueralgorithmus bei Inbetriebnahme des Wärmebildgeräts die Fokuslinse 16 durch entsprechende Ansteuerung des Stellmotors 21 in die eine Endposition ihres Stellbereichs gesetzt und dann kontinuierlich verschoben, bis sie die andere Endposition ihres Verstellbereichs erreicht hat. Zur Verkürzung des Fokussiervorgangs nach dem Start wird die den Verschiebebereich durchlaufende Verstellung der Fokuslinse 16 dann von der Steuerelektronik 23 abgebrochen und der Regelvorgang auf die dem Schärfemaximum zugehörige Fokusposition eingeleitet, wenn das Schärfemaximum bereits eindeutig erkannt ist.

Um auch bei sich veränderndem Fokuspunkt die Bildschärfe beizubehalten, wird mit erfaßten Funktionswerten der Veränderlichen S und P, die im Bereich einer durch Rauscheffekte und ähnlichem bleibenden Regelabweichung des Fokuspunktes P vom Schärfemaximum erfaßt werden, die Steigung der Funktion $S = f(P)$ durch lineare Regression berechnet. Diese Berechnung der Steigung wird ebenfalls in der Steuerelektronik 23 durchgeführt. In Abhängigkeit von dem Vorzeichen der Steigung wird von der Steuerelektronik 23 durch Ansteuerung des Stellmotors 21 der Fokuspunkt P, also die Position der Fokuslinse 16, geringfügig in die eine oder andere Verschieberrichtung immer in Richtung größerer Bildschärfewerte S verstellt. Die Verstellung wird dabei so gehalten, daß eine dadurch entstehende geringe Bildunschärfe von dem Beobachter nicht erkannt werden kann.

**Patentansprüche**

1. Verfahren zum Fokussieren eines Bildes, das in der Bildebene (11) eines Bildaufnahmegeräts, insbesondere eines Wärmebildgeräts, mittels eines optischen Objektivs (10) abgebildet, mittels eines optoelektronischen Detektors (12) bildpunktweise abgetastet und visuell dargestellt wird, bei dem die Bildschärfe durch Objektivverstellung herbeigeführt wird, **dadurch gekennzeichnet, daß** die Objektivverstellung motorisch vorgenommen wird und daß aus dem jeweils einer Objektiveinstellung zugehörigen aktuellen Bild ein Bildschärfewert ermittelt und mit den Bildschärfewerten die Objektivverstellung gesteuert wird.

2. Verfahren nach Anspruch 1, **dadurch gekennzeichnet, daß** als Bildschärfewert (S) die Summe der Quadrate der Differenz der Intensitäten $(x_{i,j})$ benachbarter Bildpunkte berechnet und das Objektiv (10) solange verstellt wird, bis die Summe ein eindeutiges Maximum (Schärfemaximum) ergibt.

3. Verfahren nach Anspruch 2, **dadurch gekennzeichnet, daß** innerhalb des Verstellbereichs des Objektivs (10) die Objektiveinstellung mittels eines Sensors (22) erfaßt und zur jeweiligen Objektiveinstellung der Bildschärfewert (S) berechnet wird und daß diejenige Objektiveinstellung vorgenommen wird, die dem Schärfemaximum zugehörig ist.

4. Verfahren nach Anspruch 3, **dadurch gekennzeichnet, daß** die Objektivverstellung immer von einem Endpunkt des Verstellbereichs des Objektivs (10) ausgehend durchgeführt wird.

5. Verfahren nach Anspruch 4, **dadurch gekennzeichnet, daß** zum Auffinden des Schärfemaximums der gesamte Verstellbereich des Objektivs (10) durchfahren wird und anschließend das Objektiv (10) auf die dem Schärfemaximum zugehörigen Objektiveinstellung zurückgeführt wird.

6. Verfahren nach Anspruch 5, **dadurch gekennzeichnet, daß** das Durchfahren des Verstellbereichs des Objektivs (10) vorzeitig abgebrochen wird, wenn ein berechneter Bildschärfewert (S) zuverlässig als Schärfemaximum erkannt wird.

7. Verfahren nach einem der Ansprüche 2 - 6, **dadurch gekennzeichnet, daß** mit Einstellung des Objektivs (10) auf das Schärfemaximum um das Schärfemaximum herum fortlaufend die Bildschärfewerte (S) als Funktion (f) der Objektivverstellung (P) erfaßt und die Steigung der Funktion $(S = f(P))$ durch lineare Regression berechnet wird und daß das Objektiv (10) je nach Vorzeichen der Steigung in die eine oder andere Richtung geringfügig so verstellt wird, daß der Bildschärfewert (S) sich vergrößert.

8. Verfahren nach einem der Ansprüche 2 - 7, **dadurch gekennzeichnet, daß** zur Bildabtastung ein Zeilendetektor (12), der eine Vielzahl (i) von in Vertikalrichtung untereinander angeordneten Detektorelementen aufweist, in Horizontalrichtung schrittweise über das Bild hinweggeführt wird, daß die von den Detektorelementen pro Abtastschritt (j) erfaßten Intensitäten $(x_{i,j})$ abgespeichert werden und daß die Berechnung der Schärfewerte (S) nur mit den Intensitäten $(x_{i,j})$ durchgeführt wird, die von in Horizontalrichtung nebeneinanderliegenden Bildpunkten abgenommen sind.

9. Verfahren nach einem der Ansprüche 2 - 7, **dadurch gekennzeichnet, daß** zur Bildabtastung ein Arraydetektor verwendet wird, der eine Vielzahl (i) von vertikal untereinander und eine Vielzahl (j) von horizontal nebeneinander angeordneten Detektorelementen aufweist, und daß die Berechnung der Schärfewerte (S) mit den Intensitäten $(x_{i,j})$ vorgenommen werden, die von Bildpunkten abgenommen sind, die horizontal nebeneinander oder vertikal übereinander oder diagonal zueinander liegen.

10. Verfahren nach einem der Ansprüche 2 - 9, **dadurch gekennzeichnet, daß** zur Berechnung der Bildschärfewerte (S) ein programmierbares Logikgatter (24) verwendet wird.

11. Verfahren nach einem der Ansprüche 1 - 10, **dadurch gekennzeichnet, daß** das vorzugsweise als Teleskop (13) ausgebildete Objektiv (10) einen in Achsrichtung des Objektivs (10) verschiebbare Fokuslinse (16) aufweist, die zur Objektivverstellung motorisch verschoben wird, und daß die Verschiebposition der Fokuslinse (16) als Objektiveinstellung erfaßt wird.

12. Vorrichtung zum Fokussieren eines Bildes in einem Bildaufnahmegerät, insbesondere einem Wärmebildgerät, das ein Teleskop (13) mit einer in der Teleskopachse verschiebbaren Fokuslinse (16) und einen in der Bildebene (11) des Bildaufnahmegeräts angeordneten, optoelektronischen Detektor (12) zur bildpunktweisen Abtastung des Bildes aufweist, und mit einer an der Fokuslinse (16) zu deren Verschiebung über deren Verstellbereich angreifenden Stellvorrichtung, **gekennzeichnet durch** ein programmierbares Logikgatter (24), das in jeder Verschiebposition der Fokuslinse (16) aus der Summe der Quadrate der Differenz der Intensitäten benachbarter Bildpunkte einen Bildschärfewert (S) berechnet, eine mit dem Logikgatter (24) verbundene Steuerelektronik (23), der die Bildschärfewerte (S) zugeführt sind, einen die Stellvorrichtung bildenden, von der Steuerelektronik (23) gesteuerten, vorzugsweise elektrischen Stellmotor (21) zum Verschieben der Fokuslinse (16) innerhalb deren Verstellbereichs, einen die Verschiebeposition der Fokuslinse (16) erfassenden Sensor (22), dessen Sensorsignal der Steuerelektronik (23) als Fokusposition (P) zugeführt ist, und **dadurch**, daß die Steuerelektronik (23) so ausgebildet ist, daß sie die Bildschärfe (S) als Funktion der Fokusposition (P) erfaßt, das Maximum der Funktion (S = f (P)) bestimmt und die Fokuslinse (16) auf die dem Schärfemaximum zugehörige Fokusposition (P) einregelt.

13. Vorrichtung nach Anspruch 12, **dadurch gekennzeichnet, daß** die Steuerelektronik (23) so ausgebildet ist, daß sie mit Starten des Fokussiervorgangs den Stellmotor (21) so ansteuert, daß die Fokuslinse (16) auf eine Endposition ihres Verstellbereichs gesetzt und von dieser Endposition aus kontinuierlich über ihren Verstellbereich verschoben wird.

14. Vorrichtung nach Anspruch 13, **dadurch gekennzeichnet, daß** die Steuerelektronik (23) so ausgebildet ist, daß sie bei Erkennen eines eindeutigen Schärfemaximums den Durchlauf der Fokuslinse (16) durch deren Verstellbereich stoppt und den Regelvorgang auf die dem Schärfemaximum zugehörige Fokusposition durchführt.

15. Vorrichtung nach einem der Ansprüchen 12 - 14, **dadurch gekennzeichnet, daß** die Steuerelektronik (23) so ausgebildet ist, daß sie im Bereich einer Regelabweichung fortlaufend die Steigung der den Zusammenhang von Bildschärfe (S) und Fokusposition (P) wiedergebenden Funktion (S = f (P)) durch lineare Regression berechnet und je nach Vorzeichen der Steigung ein den Fokuspunkt (P) geringfügig zu größerer Bildschärfe (S) verschiebendes Stellsignal an den Stellmotor (21) legt.

Fig. 1

Fig. 2